# EUROPÄISCHE PATENTSCHRIFT

(11) **EP 3 422 537 B1**
(45) Veröffentlichungstag und Bekanntmachung des Hinweises auf die Patenterteilung: **20.05.2020**
(21) Anmeldenummer: 17178938.1
(22) Anmeldetag: 30.06.2017
(51) Int. Cl.: H02K 5/08, H02K 41/03, H02K 3/47

(54) **SPULENANORDNUNG UND GEHÄUSEMODULSET FÜR EINE SPULENANORDNUNG EINES ELEKTROMOTORS**
COIL ASSEMBLY AND HOUSING MODULE SET FOR A COIL ASSEMBLY OF AN ELECTRIC MOTOR
SYSTÈME DE BOBINE ET KIT MODULAIRE DE BOÎTIER POUR UN SYSTÈME DE BOBINE D'UN MOTEUR ÉLECTRIQUE

(43) Veröffentlichungstag der Anmeldung: 02.01.2019
(73) Patentinhaber: ETEL S.A., 2112 Môtiers (CH)
(72) Erfinder: Goncalves, Jose, 2013 Colombier (CH); Gause, Alfred, 73666 Baltmannsweiler (DE); Szczukiewicz, Sylwia, 1006 Lausanne (CH); Bosco, Nicola, 2000 Neuchâtel (CH); Herrmann, Boris, 25160 Montperreux (FR)
(74) Vertreter: Maikowski & Ninnemann Patentanwälte Partnerschaft mbB

(56) Entgegenhaltungen:
- WO-A1-2011/129773
- DE-A1- 2 542 040
- DE-A1- 3 426 973
- DE-A1- 19 837 212
- JP-A- H0 970 166
- JP-A- 2001 145 327
- JP-A- 2002 027 614
- US-A1- 2003 025 403
- US-A1- 2003 111 916
- US-A1- 2004 222 707
- US-A1- 2005 140 213
- US-B1- 6 639 333

## Beschreibung

Diese Schrift betrifft eine Spulenanordnung für einen Elektromotor mit einer Anzahl von Einzelspulen und einer Anzahl von Gehäusemodulen. Außerdem betrifft diese Schrift ein Gehäusemodulset für eine Spulenanordnung für einen Elektromotor. Dabei geht es vorliegend insbesondere um ein modular ausgestaltetes Gehäusemodulset für eine Spulenanordnung eines Elektromotors in Gestalt eines eisenlosen Linearmotors.

Beispiele für einen eisenlosen Linearmotor (damit sind insbesondere kernlose Linearmotoren gemeint) sind aus der DE 10 2015 222 265 A1 und der EP 2 884 638 A1 bekannt.

Linearmotoren werden z.B. eingesetzt, wenn es um eine hochgenaue und gegebenenfalls auch schnelle Positionierung von Objekten, wie zum Beispiel eines Maschinenteiles einer Werkzeugmaschine, geht. Dabei kann das Primärteil des Linearmotors über eine geeignete Schnittstelle unmittelbar mit dem zu bewegenden Maschinenteil oder sonstigem Objekt verbunden sein. Das heißt, im Gegensatz zu einem konventionellen Rotationsmotor entfällt hier üblicherweise die Notwendigkeit eines zwischen den Linearmotor und das anzutreibende Objekt geschalteten Getriebes.

Für Anwendungen, die eine besonders präzise Positionierung erfordern, eignen sich vor allem so genannte eisenlose Linearmotoren, bei denen mindestens einer am Primärteil vorgesehenen Spule kein Kern, wie ein Eisenkern, zugeordnet ist. Hierdurch lassen sich störende Rastkräfte vermeiden. Es sind jedoch entsprechend größere Spulenströme erforderlich, um auch ohne Kern hinreichend große Kräfte am Primärteil des Linearmotors erzeugen zu können. Dies erfordert wiederum eine entsprechend gute Kühlung der Spule (n) (nachfolgend auch allgemein als Spulenanordnung bezeichnet).

Derartige Spulenanordnungen werden zum Beispiel in Form vorgeformter Einzelspulen bereitgestellt. Das heißt, der zur Bildung der Spulenanordnung verwendete, z.B. mit einer Isolationsschicht versehene Draht wird nicht unmittelbar auf einen Kern gewickelt, sondern beispielsweise ohne Kern gewickelt und sodann zur Ausbildung des Elektromotors verbaut. Hierbei kann ein Aufsetzen der kernlosen Einzelspule auf einen in den Elektromotor integrierten Eisenkern erfolgen; es kann aber auch vorgesehen sein, die Einzelspule als so genannte "Luftspule" in dem Elektromotor ohne zugehörigen Kern zu betreiben.

Insbesondere, wenn ein Elektromotor, zum Beispiel in Form eines Linearmotors, für eine hochgenaue und gegebenenfalls auch schnelle Positionierung von Objekten, wie zum Beispiel eines Maschinenteiles einer Werkzeugmaschine, eingesetzt werden soll, ist ein geringes Gewicht der verwendeten Spulenanordnung vorteilhaft. Hierzu kann der Verzicht auf einen Eisenkern einen wesentlichen Beitrag liefern. Andererseits sind dann - wie gesagt - entsprechend größere Spulenströme erforderlich, um auch ohne Eisenkern hinreichend große Kräfte am Motor erzeugen zu können. Dies erfordert wiederum eine besonders gute Kühlung der Spulenanordnung. In der EP 2 808 986 A1 sind diesbezüglich mehrere Einzelspulen dargestellt, die zur Kühlung auf einem großflächigen Kühlkörper angeordnet sind.

Unter einer Einzelspule wird vorliegend mindestens eine aus mit einer Isolationsschicht versehenem Draht gewickelte Spule verstanden.

Der Elektromotor kann darüber hinaus als ein Motor mit mehreren Phasen ausgestaltet sein, der über eine Vielzahl von Einzelspulen verfügt, wobei die Vielzahl einem ganzzahligen Vielfachen der Phasen entsprechen kann. So kann ein Elektromotor mit drei Phasen beispielsweise entweder 3, 6, 9 oder 12 usw., also N*3 Einzelspulen umfassen. Wie viele Einzelspulen vorzusehen sind, kann von der Leistungsklasse des Elektromotors abhängen.

Die US 2004 / 0222707 A1 beschreibt eine Spulenanordnung für einen Elektromotor entsprechend dem Oberbegriff des Patentanspruchs 1.

Weitere Beispiele für vorbekannte Spulenanordnungen für Elektromotoren sind aus der US 6,639,333 B1 sowie aus der US 2005 / 0140213 A1 bekannt.

Hiervon ausgehend liegt der Erfindung das Problem zugrunde, Möglichkeiten bereitzustellen, die eine kostengünstige Fertigung verschiedener Leistungsklassen eines Elektromotors erlauben.

Zur Lösung dieses Problems wird eine Spulenanordnung für einen linearen Elektromotor (Linearmotor) gemäß dem unabhängigen Patentanspruch 1 vorgeschlagen. Merkmale einiger Ausführungsbeispiele sind in den Unteransprüchen angegeben. Die Merkmale der Unteransprüche können miteinander zur Ausbildung weiterer Ausführungsformen kombiniert werden, im Rahmen der Erfindung, die durch die Patentansprüche definiert ist.

Gemäß einem ersten Aspekt umfasst eine Spulenanordnung für einen linearen Elektromotor eine Anzahl von Einzelspulen sowie eine Anzahl von Gehäusemodulen, von denen jedes ausgebildet ist, den gleichen Anteil der Anzahl von Einzelspulen einzuschließen, wobei jedes der Gehäusemodule separat von der Spulenanordnung als Kunststoffteil gefertigt worden ist.

Der Elektromotor ist ein Linearmotor, beispielsweise ein eisenloser Linearmotor. Hinsichtlich seiner elektromechanischen Funktion kann der Elektromotor ausgebildet sein, wie es beispielsweise in der DE 10 2015 222 265 A1 und der EP 2 884 638 A1 beschrieben ist.

Die Spulenanordnung mit der Anzahl von Einzelspulen kann ein Primärteil, z.B. den Ständer, des Elektromotors ausbilden. Die Einzelspulen können jeweils eisenlose Einzelspulen sein, also z.B. als Luftspule ausgebildet sein. Zum Beispiel umfasst jede Einzelspule eine Spule, die aus einem mit einer Isolationsschicht versehenem Draht gewickelt worden ist.

Nach einer Ausführungsform ist der Elektromotor als mehrphasiger Elektromotor ausgebildet, zum Beispiel als eisenloser Linearmotor mit drei Phasen. Zum Beispiel umfasst die Spulenanordnung für jede der Phasen des Elektromotors wenigstens eine Einzelspule. Weiter kann der Elektromotor in unterschiedlichen Klassen bereitgestellt werden. Zum Beispiel sind bei einem Klasse-1-Elektromotor für jede Phase nur eine einzige Einzelspule vorgesehen, bei einem Klasse-2-Elektromotor für jede Phase zwei Einzelspulen, bei einem Klasse-3-Elektromotorfürjede Phase drei Einzelspulen, bei einem Klasse-4-Elektromotor für jede Phase vier Einzelspulen usw.

Zum Beispiel ist jedes Gehäusemodul ausgebildet, eine Anzahl von Einzelspulen einzuschließen, die der Anzahl der Phasen des Elektromotors entspricht. Handelt es sich also beispielsweise um einen dreiphasigen Elektromotor, so ist jedes Gehäusemodul dazu ausgebildet, drei Einzelspulen einzuschließen.

Bei einer Ausführungsform kann der Elektromotor ein mehrphasiger Elektromotor sein und die Anzahl von Einzelspulen entspricht der Anzahl der Phasen multipliziert mit einem ganzzahligen Faktor, wobei die Anzahl der Gehäusemodule identisch ist mit dem ganzzahligen Faktor. Beispielsweise ist also für einen oben beschriebenen Klasse-1-Elektromotor nur ein Gehäusemodul vorgesehen, für ein Klasse-2-Elektromotor zwei Gehäusemodule, für ein Klasse-3-Elektromotor drei Gehäusemodule, für ein Klasse-4-Elektromotor vier Gehäusemodule usw. Der Faktor kann demnach eine Leistungsklasse des Elektromotors ausdrücken.

Die hier beschriebenen Gehäusemodule können jeweils dazu ausgebildet sein, eine Anzahl von wenigstens zwei Einzelspulen vollständig einzuschließen und gegenüber der Umwelt zu isolieren. Weiter können die Gehäusemodule jeweils ausgebildet sein, mit einem isolierenden Füllstoff, beispielsweise ein Vergussmaterial, wie ein Harz, ausgefüllt zu werden.

Beispielsweise sind die Gehäusemodule jeweils als Kunststoffteil, beispielsweise als Spritzgussteil gefertigt, und zwar separat von der Fertigung der Spulenanordnung. Das Ausbilden der Spulenanordnung kann also ein Integrieren der Einzelspulen in den Gehäusemodulen umfassen.

Mehrere Gehäusemodule können ein Gehäusemodulset ausbilden. Zum Beispiel weisen alle Gehäusemodule hinreichend viele identische Abmessungen auf, sodass sie in derselben Kavität durch einen Spritzgussprozess herstellbar sind. Dies kann eine kostengünstige Herstellung des Gehäusemodulsets begünstigen.

Das Gehäusemodulset kann modular aufgebaut sein, und für diese Zwecke kann es zweckmäßig sein, dass alle Gehäusemodule identische Abmessungen aufweisen. Aufgrund des modularen Charakters des Gehäusemodulsets können beispielsweise Elektromotoren unterschiedlicher Leistungsklasse mit gleichartigen Gehäusemodulen und damit vergleichsweise kostengünstig ausgebildet werden.

Weiter weisen alle Gehäusemodule jeweils mindestens ein Kopplungselement auf, das für die gegenseitige Ankopplung von zwei Gehäusemodulen ausgebildet ist. Diese Kopplungselemente bilden jeweils wenigstens teilweise einen Rastverschluss aus. So können beispielsweise zwei oder mehrere Gehäusemodule aufgrund der Kopplungselemente aneinander "gesteckt" werden, um einen Elektromotor einer bestimmten Leistungsklasse auszubilden.

Weiter ist vorgesehen, dass das wenigstens eine Kopplungselement eine Aussparung aufweist, die ausgebildet ist, einen Fluss eines isolierenden Füllstoffs zwischen den Innenräumen der beiden durch das mindestens eine Kopplungselement aneinandergekoppelten Gehäusemodule zu ermöglichen. So kann bei der Ausbildung der Spulenanordnung für einen Elektromotor einer bestimmten Leistungsklasse also wie folgt vorgegangen werden: zunächst werden die Einzelspulen und die Gehäusemodule separat voneinander gefertigt. Dann werden die Einzelspulen in die Gehäusemodule integriert und die Gehäusemodule können danach verschlossen werden und über die besagten Kopplungselemente miteinander verbunden werden. Danach kann eine Verfüllung der Gehäusemodule mit dem isolierenden Füllstoff (z.B. einem Vergussmaterial, wie ein Harz) erfolgen, wobei dazu zum Beispiel nur bei einem der Gehäusemodule angesetzt werden muss, da die Kopplungselemente den Fluss von dem einem Gehäusemodul in das andere Gehäusemodul erlauben. Da der Füllstoff dann auch in den Aussparungen der Kopplungselemente vorliegt und dort aushärtet, kann dies zu einer wesentlichen Stabilitätserhöhung des Gehäusemodulsets beitragen.

Jedes Gehäusemodul kann ein Unterteil und ein Oberteil aufweisen, die den jeweils eingeschlossenen Anteil der Anzahl von Einzelspulen abdecken. Das Unterteil bildet beispielsweise eine Unterseite des jeweiligen Gehäusemoduls aus, und das Oberteil eine Oberseite. Zumindest eines von dem Unterteil und dem Oberteil kann eine Seitenwand umfassen, die beispielsweise von der flächenmäßig wesentlich kleiner ist als die Unterseite oder die Oberseite. Das Gehäusemodul kann beispielsweise eine Form eines Quaders aufweisen. Beispielsweise können sowohl das Unterteil als auch das Oberteil aufeinander angepasste Außenwandstrukturen aufweisen, sodass bei Zusammenführung von Oberteil und Unterteil eine Seitenwand mit Doppelwandstruktur entsteht, was die Robustheit des Gehäusemoduls erhöhen kann.

Bei einer weiteren Ausführungsform sind das Unterteil und das Oberteil als einstückiges Kunststoffteil gefertigt und durch eine flexible Seitenwand miteinander verbunden. Nach Fertigung des Gehäusemoduls können Unterteil und Oberteil planar zueinander angeordnet sein, und die flexible Seitenwand kann ein "Zuklappen" des Gehäusemoduls erlauben, nachdem die Einzelspulen in dem Unterteil oder dem Oberteil positioniert worden sind.

Bei einer Ausführungsform sind das Unterteil und das Oberteil gleichartig, beispielsweise identisch zueinander ausgebildet. Dies erlaubt eine noch kostengünstigere Herstellung der Gehäusemodule für die unterschiedlichen Leistungsklassen des Elektromotors. Zum Beispiel können das Unterteil und das Oberteil bezogen auf eine Längsachse symmetrisch positioniert werden und nach Einbringung der Einzelspulen zusammengeführt werden.

Nach einer weiteren Ausführungsform umfasst wenigstens eines von dem Unterteil und dem Oberteil ein Positioniermittel, das eine positionsgenaue Einbringung der jeweiligen Einzelspulen erlaubt. Beispielsweise weist jede Einzelspule einen inneren Hohlraum auf (beispielsweise dort, wo bei nicht-eisenlosen Spulen ein Kern vorgesehen ist) und das Positioniermittel ist hinsichtlich seiner Abmessungen an diesen inneren Hohlraum der Einzelspule angepasst. Die Einzelspulen kann dann sozusagen über das Positioniermittel gestülpt werden und dieses nach Anordnung innerhalb des Gehäusemoduls umgeben.

Es liegt auch im Rahmen der vorliegenden Erfindung, dass das Unterteil und das Oberteil so ausgestaltet sind und so ineinander greifen, dass wenigstens eine elektrisch isolierende Zwischenwand entsteht. Die Zwischenwand kann beispielsweise zwei benachbarte Einzelspulen voneinander separieren.

Außerdem kann vorgesehen sein, dass jedes Gehäusemodul eine Seitenwandstruktur mit Mehrfachverstärkungselementen aufweist, wobei wenigstens eines der Mehrfachverstärkungselemente eine Höhe hat, die so hoch oder halb so hoch ist wie eine Außenwand des Gehäusemoduls. Dies kann die Stabilität der Gehäusemodule verbessern, weil beispielsweise ein Eindrücken der Unterseite oder der Oberseite vermieden wird oder ein Krafteinfluss auf die Außenwände besser kompensiert werden kann. Beispielsweise weist nur das Unterteil oder nur das Oberteil besagte Mehrfachverstärkungselemente auf, die dann so hoch sein sollten wie die Außenwand des Gehäusemoduls. Bei einer anderen Ausführungsform weisen sowohl das Oberteil als auch das Unterteil besagte Mehrfachverstärkungselemente auf, die dann z.B. jeweils etwa halb so hoch sein können wie die Außenwand und bei der Aneinanderkopplung von Oberteil und Unterteil aufeinandertreffen und in Summe dann die Höhe der Außenwand aufweisen.

Weiter können die Mehrfachverstärkungselemente eine Befestigungsaussparung des Gehäusemoduls integrieren, wobei die Befestigungsaussparung dazu ausgestaltet sein kann, eine ein-oder mehrteilige Hülse, die aus einem anderem Material gefertigt sein kann als das Gehäusemodul, insbesondere aus einem harten Metall. Dadurch kann das Gehäusemodul bzw. das Gehäusemodulset mit der Vielzahl von Gehäusemodulen in vorteilhafterweise an einem Maschinenteil befestigt werden.

Gleichzeitig können die Mehrfachverstärkungselemente eine Führung für eine Stromleitung innerhalb des Gehäusemoduls ausbilden. Die Mehrfachverstärkungselemente können beispielsweise versetzt zueinander angeordnet sein und somit Bahnen ausbilden, in denen eine Stromleitung ortsfest verlegt werden kann.

Nach einer weiteren Ausführungsform ist ein separat von den Gehäusemodulen gefertigtes Stabilisierungselement vorgesehen, wobei jedes Gehäusemodule eine Aufnahme aufweisen kann, die ausgebildet ist, der Stabilisierungselement ganz oder teilweise aufzunehmen. Beispielsweise ist der Stabilisierungselement nach Art einer Stange ausgebildet, die in die Aufnahmen von wenigstens zwei Gehäusemodule eingreift. Weiter können die Gehäusemodule derart ausgebildet sein, dass bei der Verfüllung der Module mit dem isolierenden Füllstoff auch das Stabilisierungselement von dem Füllstoff umgeben wird und der Füllstoff auch dort aushärtet. Das Stabilisierungselement kann somit zur Steifigkeit des Gehäusemodulsets beitragen.

Außerdem kann vorgesehen sein, dass bei wenigstens einem der Gehäusemodule wenigstens eine der besagten Befestigungsaussparungen vorhanden ist, wobei die wenigstens eine Befestigungsaussparung zur Aufnahme einer ein- oder mehrteiligen Hülse ausgebildet sein kann.

Weitere Einzelheiten und Vorteile der Erfindung werden bei der nachfolgenden Beschreibung einiger Ausführungsbeispiele anhand der Figuren deutlich werden.

Es zeigen:
- Figur 1: exemplarisch und schematisch einen Ausschnitt einer Spulenanordnung mit drei Einzelspulen, die in einem Gehäusemodul eingeschlossen sind, gemäß einer oder mehreren Ausführungsformen;
- Figur 2: exemplarisch und schematisch einen Ausschnitt eines Gehäusemodulsets mit drei Gehäusemodulen für eine Spulenanordnung gemäß einer oder mehreren Ausführungsformen;
- Figur 3: exemplarisch und schematisch einen Ausschnitt eines Unterteils eines Gehäusemoduls gemäß einer oder mehreren Ausführungsformen;
- Figur 4: exemplarisch und schematisch einen Ausschnitt eines Unterteils eines Gehäusemoduls gemäß einer oder mehreren Ausführungsformen;
- Figur 5: exemplarisch und schematisch einen Ausschnitt eines Unterteils und eines Oberteils eines Gehäusemoduls gemäß einer oder mehreren Ausführungsformen;
- Figur 6: exemplarisch und schematisch einen Ausschnitteines Gehäusemoduls gemäß einer oder mehreren Ausführungsformen;
- Figur 7: exemplarisch und schematisch einen Ausschnitt einer Seitenwandstruktur eines Gehäusemoduls gemäß einer oder mehreren Ausführungsformen;
- Figur 8: exemplarisch und schematisch einen Ausschnittzwei aneinander zu koppelnde Gehäusemodule gemäß einer oder mehreren Ausführungsformen;
- Figur 9: exemplarisch und schematisch einen Ausschnitteines Gehäusemoduls gemäß einer oder mehreren Ausführungsformen;
- Figur 10: exemplarisch und schematisch einen Ausschnitteines Gehäusemoduls gemäß einer oder mehreren Ausführungsformen;
- Figur 11: exemplarisch und schematisch einen Ausschnitt einer Querschnittsansicht eines Gehäusemoduls gemäß einer oder mehreren Ausführungsformen;
- Figur 12: exemplarisch und schematisch einen Ausschnitt eines Unterteils und eines Oberteils eines Gehäusemoduls gemäß einer oder mehreren Ausführungsformen;
- Figur 13: exemplarisch und schematisch eine Zusammenführung eines Unterteils und eines Oberteils eines Gehäusemoduls gemäß einer oder mehreren Ausführungsformen;
- Figur 14: exemplarisch und schematisch einen Ausschnitt eines Gehäusemoduls sowie mögliche Koppelstellen für den Zusammenhalt von Oberteil und Unterteil des Gehäusemoduls gemäß einer oder mehreren Ausführungsformen;
- Figur 15: exemplarisch und schematisch einen Ausschnitt von Mehrfachverstärkungselementen eines Gehäusemoduls gemäß einer oder mehreren Ausführungsformen;
- Figur 16: exemplarisch und schematisch einen Ausschnitt von Mehrfachverstärkungselementen eines Gehäusemoduls gemäß einer oder mehreren Ausführungsformen;
- Figur 17: exemplarisch und schematisch einen Ausschnitteines Gehäusemoduls gemäß einer oder mehreren Ausführungsformen;
- Figur 18: exemplarisch und schematisch eine Zusammenführung eines Unterteils und eines Oberteils eines Gehäusemoduls gemäß einer oder mehreren Ausführungsformen; und
- Figur 19: exemplarisch und schematisch eine Zusammenführung eines Unterteils und eines Oberteils eines Gehäusemoduls gemäß einer oder mehreren Ausführungsformen.

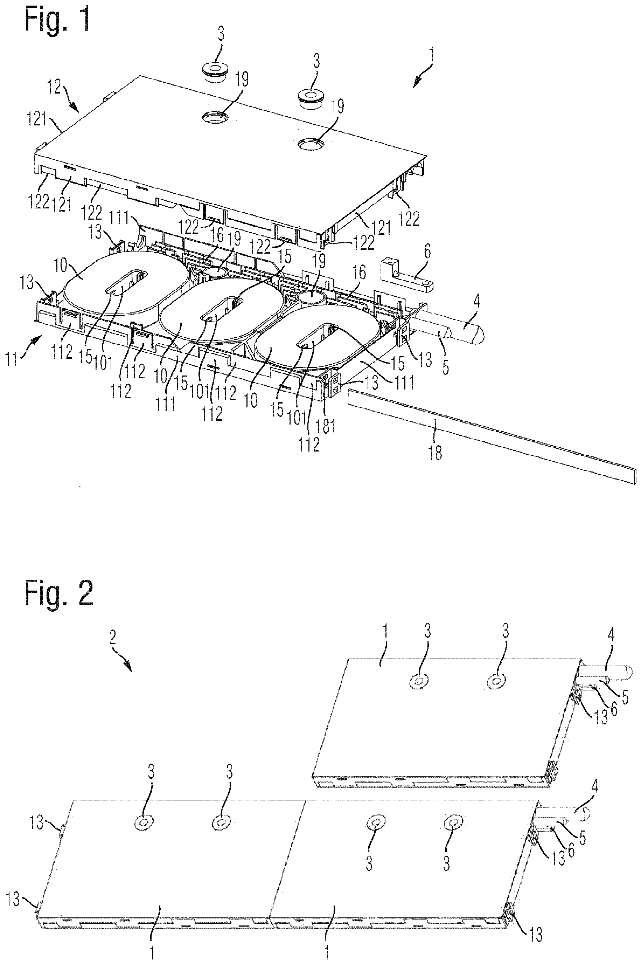

Figur 1 zeigt schematisch und exemplarisch eine Spulenanordnung für einen Elektromotor. Der Elektromotor ist ein Linearmotorn, beispielsweise ein eisenloser Linearmotor (auch als kernloser Linearmotor bezeichnet) sein, beispielsweise ein dreiphasiger eisenloser Linearmotor.

Die Spulenanordnung umfasst eine Anzahl von Einzelspulen 10. Beispielsweise ist für jede Phase des Elektromotors wenigstens eine Einzelspule 10 vorgesehen. Die Einzelspulen 10 umfassen beispielsweise keinen Kern, sondern weisen im Inneren einen Hohlraum 101 auf. Die Einzelspulen 10 können jeweils eisenlose Einzelspulen sein, also z.B. als Luftspule ausgebildet sein. Zum Beispiel umfasstjede Einzelspule eine Spule, die aus einem mit einer Isolationsschicht versehenem Draht gewickelt worden ist.

Die Einzelspulen 10 sind in einem Gehäusemodul 1 angeordnet. Mit anderen Worten ist das Gehäusemodul 1 ausgebildet, die Einzelspulen 10 einzuschließen. Das Gehäusemodul 1 ist separat von der Spulenanordnung als Kunststoffteil gefertigt worden, beispielsweise als Spritzgussteil.

Das Material des Gehäusemoduls 1 kann in Abhängigkeit von den mechanischen und den elektrotechnischen Anforderungen ausgewählt werden, die an das Gehäusemodul 1 gestellt werden. Es kommen Hochleistungsmaterialien oder technische Materialien in Betracht, wobei das ausgewählte Material eine amorphe oder eine halbkristalline Struktur aufweisen kann. Es kann für das Gehäusemodul 1 beispielsweise ein Material aus der folgenden Materialgruppe vorgesehen werden: Polyphenylensulfid (PPS), Polybutylenterephthalat (PBT), Acrylnitril-Butadien-Styrol-Copolymere (ABS), Flüssigkristalline Polymere (LCP), Polyetherimid (PEI), Polyetheretherketon (PEEK). Das Gehäusemodul 1 kann ein Unterteil 11 und ein Oberteil 12 aufweisen. Das Unterteil 11 und das Oberteil 12 können ausgebildet sein, formschlüssig zusammengeführt zu werden, um die Einzelspulen 10 einzuschließen.

Weiter kann das Gehäusemodul 1 mit einer oder mehreren Befestigungsaussparungen 19 versehen sein, die eine Befestigung des Gehäusemoduls 1 an einem Maschinenteil ermöglichen. Die Befestigungsaussparungen 19 können jeweils durchgängig ausgebildet sein. Beispielsweise sind die Befestigungsaussparungen 19 (beispielsweise in Gestalt von Befestigungsbohrungen) ausgebildet, eine ein- oder mehrteilige Hülse 3 wenigstens teilweise aufzunehmen. Zum Beispiel können durch die Hülsen 3 das Oberteil 12 und das Unterteil 11 miteinander verschraubt werden, was noch näher ausgeführt werden wird. Außerdem kann, wie weiter unten noch näher ausgeführt werden wird, das Gehäusemodul 1 über die Hülsen 3 an einem Maschinenteil befestigt werden.

Das Unterteil 11 kann eine erste Außenwandstruktur 111 aufweisen, und das Oberteil 12 kann eine zweite Außenwandstruktur 121 aufweisen. Bei Zusammenführung von Oberteil 12 und Unterteil 11 können diese Außenwandstrukturen 111 und 121 zusammengreifen und die Außenwand des Gehäusemoduls 1 ausbilden. Eine durch die Außenwand gebildete Höhe des Gehäusemoduls 1 liegt bei einer exemplarischen Ausführungsform beispielsweise im Bereich von 5 mm bis 10 mm, und die durch das Unterteil 11 gebildete Unterseite des Gehäusemoduls 1 weist beispielsweise eine Länge von 50 mm bis 150 mm auf sowie eine Breite von 25 mm bis 80 mm; die durch das Oberteil 12 gebildete Oberseite des Gehäusemoduls 1 kann dieselbe Länge und Breite wie die Unterseite aufweisen.

Um ein Zusammengreifen zwischen dem Oberteil 12 und dem Unterteil 11 zu unterstützen, kann das Unterteil 11 erste Verbindungselemente 112 umfassen, und das Oberteil 12 zweite Verbindungselemente 122. Diese Verbindungselemente 112 und 122 können nicht nur in den Außenwandstrukturen 111/121 vorgesehen sein, sondern, wie in der Figur 1 veranschaulicht, beispielsweise auch am Boden des Unterteils 11 und/oder am Boden des Oberteils 12. Bei Zusammenführung der beiden Teile 11 und 12 können diese Verbindungselemente 112 und 122 ineinander greifen, beispielsweise nach Art eines Rast- oder Steckverschlusses.

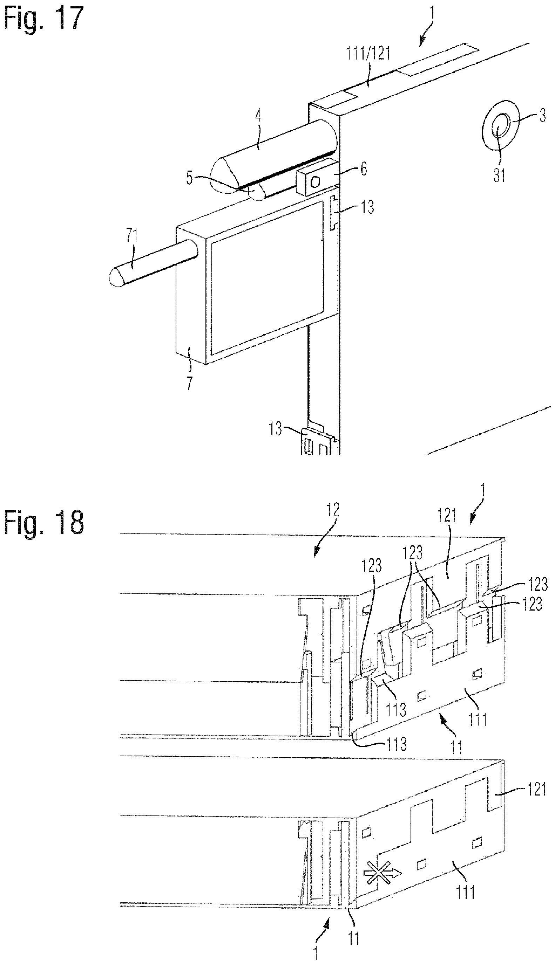

Die Figur 18 veranschaulicht, dass die erste Außenwandstruktur 111 des Unterteils 11 einen strukturierten Abschluss aufweisen kann, der beispielsweise zueinander versetzt angeordnete erste Abschrägungen 113 aufweist. In gleicher Weise kann die zweite Außenwandstruktur 121 des Oberteils 12 einen strukturierten Abschluss aufweisen, der beispielsweise zueinander versetzt angeordnete zweite Abschrägungen 123 aufweist. Bei Zusammenführung von Oberteil 12 und Unterteil 11 können die ersten Abschrägungen 113 und die zweiten Abschrägungen 123 komplementär zueinander liegen, wie dies im oberen Abschnitt der Figur 18 veranschaulicht ist. Nach Zusammenführung der beiden Teile 11 und 12 liegen die Flächen der ersten Abschrägungen 113 an den Flächen der zweiten Abschrägungen 123 an (s. unterer Abschnitt der Figur 18). Auf diese Weise kann beispielsweise ein Längsversatz zwischen Oberteil 12 und Unterteil 11 verhindert werden, was in der Figur 18 durch den durchgestrichenen Pfeil angedeutet ist.

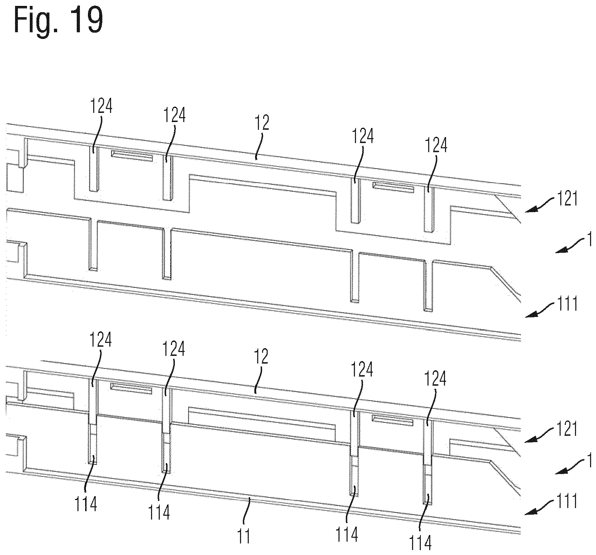

Um weiter ein Zusammengreifen zwischen dem Oberteil 12 und dem Unterteil 11 zu unterstützen, kann das Unterteil 11 erste Führungselemente 114 umfassen, und das Oberteil 12 zweite Führungselemente 124, wie in der Figur 19 veranschaulicht. Die ersten Führungselemente 114 und die zweiten Führungselemente 124 können beispielsweise Führungsstifte (s. Bezugsziffern 124) sowie komplementär dazu ausgebildete Führungsnuten (s. Bezugsziffern 114) umfassen, in die die Führungsstifte eingelassen werden können. Beispielsweise werden Oberteil 12 und Unterteil 11 vor der Zusammenführung aufeinander ausgerichtet (s. oberer Abschnitt der Figur 19) und dann derart zusammengeführt, dass die ersten Führungselemente 114 und die zweiten Führungselemente 124 ineinandergreifen, beispielsweise derart, dass die Führungskräfte in die Führungsnuten eingelassen werden (s. unterer Abschnitt der Figur 19). Es versteht sich, dass die Figur 19 nur einen Ausschnitt des Gehäusemoduls 1 zeigt, und dass beispielsweise das Oberteil 12 in einem nicht gezeigten Bereich zweite Führungselemente 124 in Gestalt von Führungsnuten aufweist, in die erste Führungselemente 114 in Gestalt von Führungsstiften des Unterteils 11 eingelassen werden können.

Das Oberteil 12 und das Unterteil 11 können gleichartig, beispielsweise identisch zueinander ausgebildet sein. Bei Drehung eines der beiden Teile 11 und 12 um 180° können diese wiewohl formschlüssig zusammengeführt werden.

Bei einer Ausführungsform besteht das Gehäusemodul 1 im Wesentlichen aus nur den beiden Grundteilen Unterteil 11 und Oberteil 12, die identisch zueinander ausgebildet sein können.

Nun wieder bezugnehmend auf die Figur 1 kann zwischen der Außenwand 111/121 und den Einzelspulen 10 eine Seitenwandstruktur mit Mehrfachverstärkungselementen 16 ausgebildet sein, wobei wenigstens eines der Mehrfachverstärkungselemente 16 eine Höhe haben kann, die so groß ist wie die Außenwand des Gehäusemoduls 1. Beispielsweise weist nur das Unterteil 11 oder nur das Oberteil 12 besagte Mehrfachverstärkungselemente 16 auf, die dann so hoch sein sollten wie die Außenwand des Gehäusemoduls 1. Bei einer anderen Ausführungsform (z.B. dann, wenn das Oberteil 12 und das Unterteil 11 identisch zueinander ausgebildet sind) weisen sowohl das Oberteil als auch das Unterteil besagte Mehrfachverstärkungselemente 16 auf, die dann z.B. jeweils etwa halb so hoch sein können wie die Außenwand und bei der Aneinanderkopplung von Oberteil 12 und Unterteil 11 aufeinandertreffen und in Summe dann die Höhe der Außenwand aufweisen.

Gleichzeitig können die Mehrfachverstärkungselemente 16 eine Führung für eine (in der Figur 1) nicht gezeigte Stromleitung ausbilden, beispielsweise für eine Fortsetzung einer Leistungszuleitung 4 und/oder eine Fortsetzung einer Signalzuleitung 5.

Außerdem kann das Gehäusemodul 1 ausgebildet sein, einen Masseanschluss 6 wenigstens teilweise aufzunehmen, wobei der Masseanschluss 6 beispielsweise nach Art einer Masseschiene ausgebildet sein kann.

Ein etwaiger, nach Einbringung der Einzelspulen 10 im Inneren des Gehäusemoduls 1 verbleibender Hohlraum kann durch einen isolierenden Füllstoff, beispielsweise eine Vergussmasse, wie ein Harz, verfüllt werden.

Wie bereits einleitend erläutert worden ist, kann der Elektromotor in unterschiedlichen Klassen bereitgestellt werden. Zum Beispiel sind bei einem Klasse-1-Elektromotor für jede Phase nur eine einzige Einzelspule 10 vorgesehen, bei einem Klasse-2-Elektromotor für jede Phase zwei Einzelspulen 10, bei einem Klasse-3-Elektromotor für jede Phase drei Einzelspulen 10, bei einem Klasse-4-Elektromotorfürjede Phase vier Einzelspulen 10 usw. Zur Ausbildung von Elektromotoren einer bestimmten Klasse wird beispielsweise eine entsprechende Anzahl von Gehäusemodulen 1 bereitgestellt. Zum Beispiel ist jedes Gehäusemodul 1 ausgebildet, eine Anzahl von Einzelspulen 10 einzuschließen, die der Anzahl der Phasen des Elektromotors entspricht. Handelt es sich also beispielsweise um einen dreiphasigen Elektromotor, so ist jedes Gehäusemodul 1 dazu ausgebildet, drei Einzelspulen 10 einzuschließen, wie in der Fig. 1 exemplarisch veranschaulicht ist. Bei einer Ausführungsform kann der Elektromotor also ein mehrphasiger Elektromotor sein und die Anzahl von Einzelspulen 10 entspricht der Anzahl der Phasen multipliziert mit einem ganzzahligen Faktor, wobei die Anzahl der Gehäusemodule 1 identisch ist mit dem ganzzahligen Faktor. Beispielsweise ist also für einen oben beschriebenen Klasse-1-Elektromotor nur ein Gehäusemodul 1 vorgesehen, für ein Klasse-2-Elektromotor zwei Gehäusemodule 1, für ein Klasse-3-Elektromotor drei Gehäusemodule 1, für ein Klasse-4-Elektromotor vier Gehäusemodule 1 usw. Der Faktor kann demnach eine Leistungsklasse des Elektromotors ausdrücken.

Damit mehrere Gehäusemodule 1 aneinander gekoppelt werden können, weist jedes Gehäusemodul 1 wenigstens ein Kopplungselement 13 auf, das für die gegenseitige Ankopplung von zwei der Gehäusemodule 1 ausgebildet ist. Außerdem kann ein separat von den Gehäusemodulen 1 gefertigtes Stabilisierungselement 18 vorgesehen sein, wobei jedes Gehäusemodul eine Aufnahme 181 aufweist, die ausgebildet ist, das Stabilisierungselement 18 ganz oder teilweise aufzunehmen. Der Stabilisierungselement 18 kann nach Art einer Stange ausgebildet sein und eine Länge aufweisen, die etwa einem ganzzahligen Vielfachen der Länge eines Gehäusemoduls 1 entspricht.

Die Kopplungselemente 13 sind beispielsweise an den Außenwandstrukturen 111/121 vorgesehen, so dass die Aneinanderkopplung der Gehäusemodule 1 beispielsweise nicht an der Unter- oder Oberseite der Gehäusemodule 1 erfolgt, sondern an den Außenwänden, wie in den Figuren 1 und 2 veranschaulicht ist.

Die vorstehend genannten Aspekte betreffend die Aneinanderkopplung von Gehäusemodulen 1 ist exemplarisch und schematisch in der Figur 2 dargestellt. Die mehreren Gehäusemodule 1 können ein Gehäusemodulset 2 ausbilden.

Zum Beispiel weisen alle Gehäusemodule 1 hinreichend viele identische Abmessungen auf, sodass sie in derselben Kavität durch einen Spritzgussprozess herstellbar sind. Dies kann eine kostengünstige Herstellung des Gehäusemodulsets 2 begünstigen.

Alle Gehäusemodule 1 können identische Abmessungen aufweisen. Beim Ausführungsbeispiel gemäß der Figur 2 schließt beispielsweise jedes Gehäusemodul 1 drei Einzelspulen 10 ein. Durch die Kopplungselemente 13 sind die Gehäusemodule 1 aneinandergekoppelt, und das in der Figur 2 nicht sichtbare Stabilisierungselement 18 kann zu einer mechanischen Robustheit und Steifigkeit des Gehäusemodulsets 2 beitragen.

Aufgrund dieses modularen Charakters des Gehäusemodulsets 2 können in kostengünstiger Weise Elektromotoren unterschiedlicher Leistungsklassen hergestellt werden.

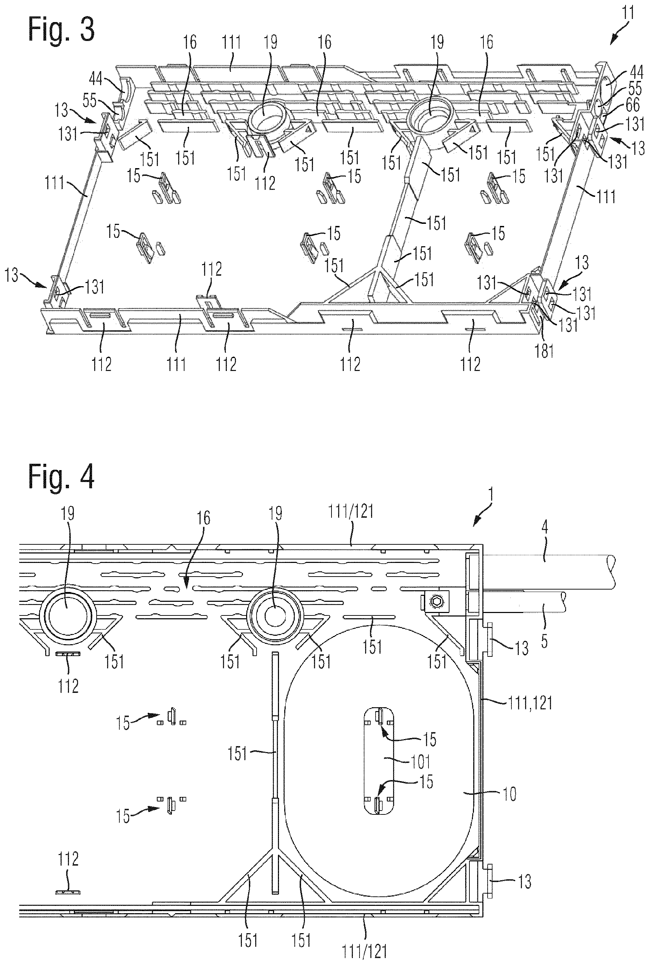

Mit Blick auf die Figuren 3 bis 19 sollen weitere optionale und nicht optionale Merkmale der Gehäusemodule 1 erläutert werden. Es versteht sich, dass in den Figuren gleich Bezugszeichen gleiche Elemente bezeichnen können und nicht für jede Figur jedes Element erneut erläutert werden wird.

Gemäß dem Ausführungsbeispiel der Figur 3, die einen Ausschnitt des Unterteils 11 des Gehäusemoduls 1 zeigt, kann das Gehäusemodul 1 für jede der Einzelspulen 10 (in der Figur 3 nicht gezeigt) ein Positioniermittel 15 umfassen, welches eine positionsgenaue Einbringung der jeweiligen Einzelspule 10 erlaubt. Bei dem Ausführungsbeispiel gemäß der Figur 3 sind für jede Einzelspulen 10 zwei Positioniermittel 15 vorgesehen, die hinsichtlich ihres Orts innerhalb des Gehäusemoduls 1 beispielsweise an die Abmessungen des besagten Hohlraums 101 angepasst sind, was in der Figur 4 für eine Einzelspule 10 etwas deutlicher veranschaulicht ist.

Zur äußeren Eingrenzung der Einzelspulen 10 können weitere Positionierhilfen 151 vorgesehen sein, die zum Teil auch durch die Außenwandstruktur 111 ausgebildet werden können. Die Positionierhilfen 151 können auch in Gestalt von isolierenden Zwischenwänden vorliegen, wie in der Fig. 1 veranschaulicht. Dort sind die linken Einzelspulen 10 von der rechten Einzelspule 10 in Längsrichtung voneinander separiert. Mit anderen Worten können das Unterteil 11 und das Oberteil 12 so ausgestaltet sein und so ineinander greifen, dass wenigstens eine elektrisch isolierende Zwischenwand entsteht.

In der Außenwandstruktur 111 können ferner Aufnahmen 44 für die Leistungszuleitung 4, Aufnahmen 55 für die Signalzuleitung 5, eine Aufnahme 66 für den Masseanschluss 6 sowie die Aufnahme 181 für das Stabilisierungselement 18 vorgesehen sein.

Die Kopplungselemente 13 weisen eine Aussparung 131 auf, die ausgebildet ist, einen Fluss des isolierenden Füllstoffs (beispielsweise ein Harz) zwischen den Innenräumen der beiden durch das Kopplungselement 13 aneinandergekoppelte Gehäusemodule 1 ermöglicht. So kann beispielsweise bei der Verfüllung der Gehäusemodule 1 des Gehäusemodulsets 2 nur bei einem der Gehäusemodule 1 angesetzt werden und aufgrund der Aussparung 131 sichergestellt werden, dass alle Gehäusemodule 1 mit dem Füllstoff ausgefüllt werden. Gleichzeitig wird der Verbund der Gehäusemodule 1 bei Aushärtung des Füllstoffs auch an den Stellen der Kopplungselemente 13 verstärkt.

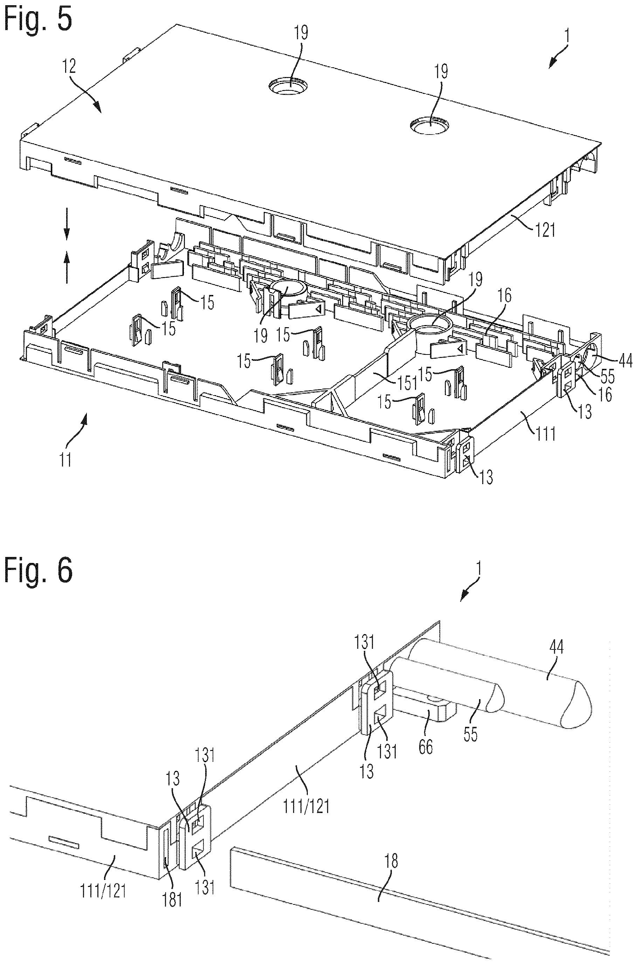

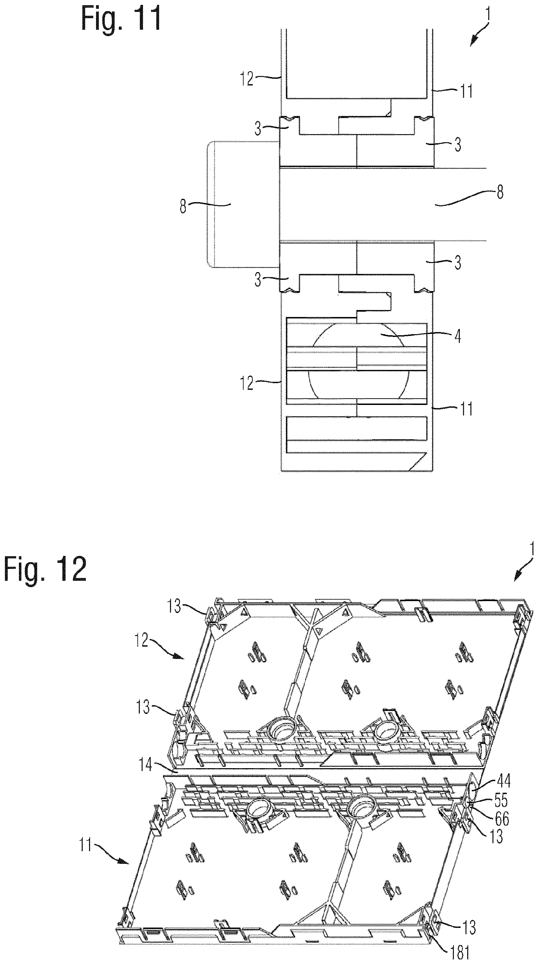

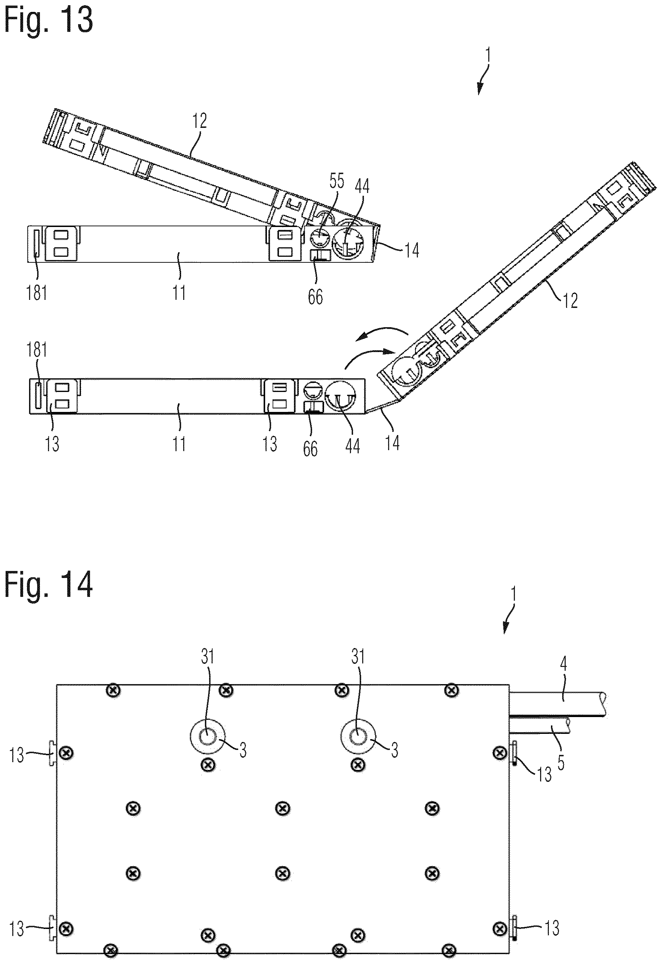

Die Figur 5 veranschaulicht, wie das Unterteil 11 und das Oberteil 12, die identisch zu einander ausgebildet sein können, zusammengeführtwerden können, nämlich entlang der Richtung, wie sie durch den gegenläufigen Doppelpfeil angedeutet ist. Die identisch zu einander ausgebildeten Teile 11 und 12 sind dabei um 180° zueinander versetzt, sodass diese formschlüssig zusammengreifen können. Bei diesem Ausführungsbeispiel sind die beiden Teile 11 und 12 als Einzelteile gefertigt. Bei einem anderen Ausführungsbeispiel, wie es schematisch und exemplarisch in den Figuren 12 und 13 dargestellt ist, sind das Unterteil 11 und das Oberteil 12 als einstückiges Kunststoffteil gefertigt und durch eine flexible Seitenwand 14 miteinander verbunden. Die Seitenwand 14 ist beispielsweise derart ausgestaltet, dass eine Zusammenführung von Oberteil 12 und Unterteil 11 entlang der durch die gegenläufige Doppelpfeilstruktur angedeuteten Richtung möglich ist, also beispielsweise durch ein "Zuklappen". Wiederum können aber auch bei diesem Ausführungsbeispiel das Unterteil 11 und das Oberteil 12 identisch zueinander ausgebildet sein; die Komponenten der beiden Teile 11 und 12 sind lediglich entlang einer Längsachse symmetrisch zueinander vorgesehen.

Figur 6 veranschaulicht etwas deutlicher, dass das Gehäusemodul 1 ausgebildet sein kann, durch die Aufnahme 181 das Stabilisierungselement 18 aufzunehmen. Dieses Stabilisierungselement 18 ragt in wenigstens zwei der Gehäusemodule 1 und kann eine Längserstreckung aufweisen, die in etwa der gesamten Längserstreckung der mehreren Gehäusemodule 1, die durch das Stabilisierungselement 18 miteinander verbunden sind, entspricht. Dies kann gleichzeitig in etwa der Länge des Elektromotors entsprechen. Bei der Verfüllung der Gehäusemodule 1 mit dem isolierenden Füllstoff kann auch das Stabilisierungselement 18 abgedeckt werden, sodass insbesondere nach Aushärtung des Füllstoffs durch das Stabilisierungselement 18 eine erhöhte Steifigkeit des Gehäusemodulsets 2 erzielt werden kann.

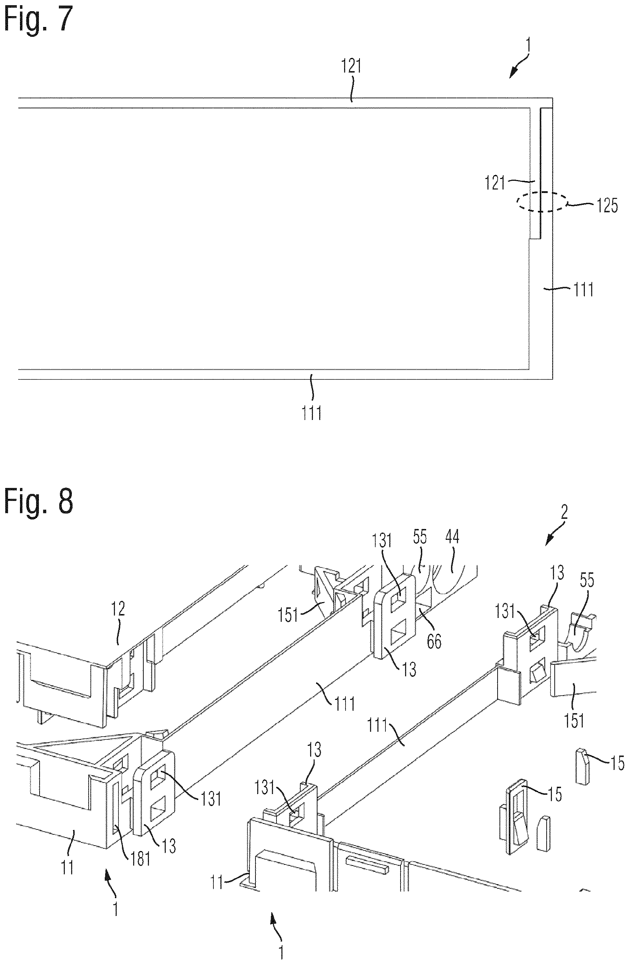

Mit Blick auf das Ausführungsbeispiel der Figur 7 soll verstanden werden, dass die erste Außenwandstruktur 111 des Unterteils 11 und die zweite Außenwandstruktur 121 des Oberteils 12 nach Zusammenführung der beiden Teile 11 und 12 derart ineinandergreifen können, dass sie wenigstens teilweise eine Doppelwandstruktur 125 des Gehäusemoduls 1 ausbilden. Diese Doppelwandstruktur 125 kann bei anderen Ausführungsformen des Gehäusemoduls 1 vollständig oder zumindestüberwiegend in der Außenwand ausgebildet werden, bei anderen Ausführungsformen wiederum nur zu einem geringen Anteil, wie in der Figur 7 veranschaulicht ist. Beispielsweise weist die Doppelwandstruktur 125 eine Dicke im Bereich von 0,3 mm bis 2 mm, wobei die Dicke in Abhängigkeit von den isolationstechnischen Vorgaben und dem Material des Gehäusemoduls 1 definiert werden kann. Eine derartige Doppelwandstruktur 125 kann auch in vorteilhafterweise die Erfüllung einschlägiger technischer Normen erlauben, beispielsweise die sicherzustellende elektrische Isolierung, wie den Aspekt "Kriechstrecke" (engl.: creepage distance). Zum Beispiel kann die Kriechstrecke zwischen wenigstens einer der Einzelspulen 10 (die ein hohes Potential führen können) und der Umgebung (also das Gebiet außerhalb des Gehäusemoduls 1) aufgrund der Doppelwandstruktur 125 vergrößert werden.

Figur 8 zeigt exemplarisch und schematisch einen Ausschnitt zwei aneinander zu koppelnde Gehäusemodule 1. Die Kopplungselemente 13 der Gehäusemodule 1 sind zueinander komplementär ausgebildet, indem sie nach Art eines Rastverschlusses ineinandergreifen, sodass sich die Außenwände 111/121 der aneinandergekoppelten Gehäusemodule 1 kontaktieren. Beispielsweise kann die Hälfte der Anzahl der Kopplungselemente 13 des einen Gehäusemoduls 1 von den Außenwänden 111/121 hervorragen (s. linkes Gehäusemodul 1), wohingegen die übrige Hälfte durch eine Art Aussparungsstruktur ausgebildet ist (s. rechtes Gehäusemodul 1). Es versteht sich, dass dabei nach Aneinanderkopplung der Gehäusemodule 1 zur Ausbildung des Gehäusemodulsets 2 zumindest bei einem Gehäusemodul 1 "nicht verwendete" Kopplungselemente 13 hervorstehen können. Nach einer Ausführungsform, wie es schematisch und exemplarisch in der Figur 17 veranschaulicht ist, können die Kopplungselemente 13 ausgebildet sein, ein gehäusemodulexternes Gerät aufzunehmen, beispielsweise einen Sensor 7. Der Sensor 7 kann beispielsweise ein Halleffektsensor sein. Beispielsweise umfasst der Sensor 7 eine Sensorsignalleitung 71, über die der Sensor 7 Sensormesssignale ausgibt und/oder Sensorsteuersignale empfängt.

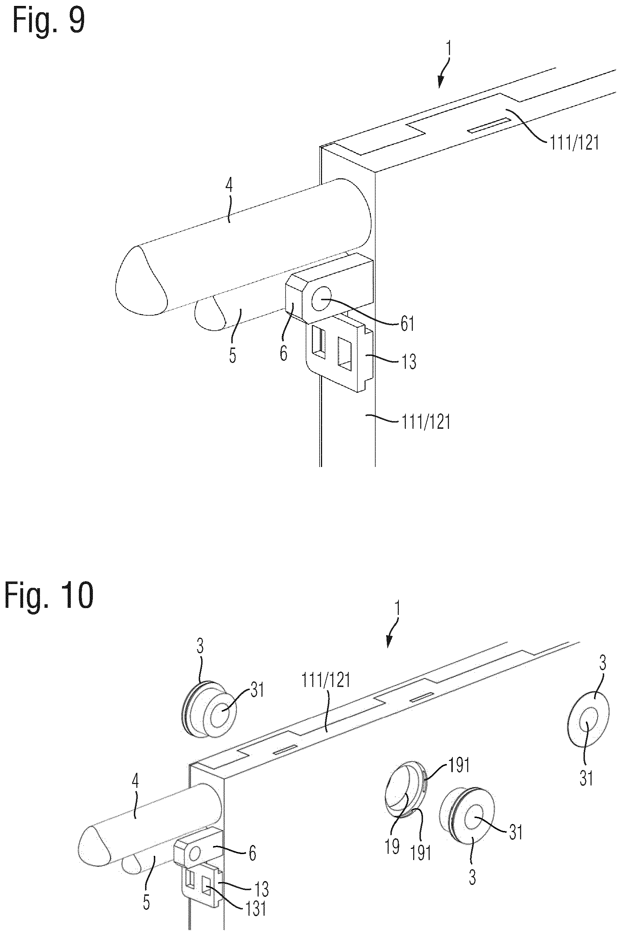

Nach einer Ausführungsform sind die Aufnahme 44 zur Aufnahme der Leistungszuleitung 4 und das wenigstens eine Kopplungselement 13 benachbart zueinander angeordnet, was auch in der Figur 9 veranschaulicht ist. Aus dem Gehäusemodul 1 kann weiter der Masseanschluss 6 hervorragen, der eine Aussparung 61 aufweisen kann, die beispielsweise zur Ankopplung eines Massekabels (nicht gezeigt) dient.

Unter Bezugnahme auf das Ausführungsbeispiel gemäß der Figur 10 soll etwas näher auf die schon eingangs erläuterten Befestigungsaussparungen 19 des Gehäusemoduls 1 eingegangen werden. Wie gesagt können diese dazu dienen, das Gehäusemodul 1 letztlich an einem Maschinenteil zu befestigen. Für diese Zwecke können die Befestigungsaussparungen 19 jeweils zur Aufnahme einer ein- oder mehrteiligen Hülse 3 ausgebildet sein. Dazu können die Befestigungsaussparungen 19 jeweils eine Gewindestruktur 191 aufweisen. Das Gehäusemodul 1 kann mehrerer dieser Befestigungsaussparungen 19 aufweisen, beispielsweise wenigstens zwei davon. Ferner kann jede der Befestigungsaussparungen 19 (beispielsweise mittels der Gewindestruktur 191) ausgebildet sein, von beiden Seiten her Hülsen 3 aufzunehmen. Die Gewindestruktur 191 kann beispielsweise durch eine Anzahl von Nuten und Gegennuten ausgebildet sein. Außerdem können die Befestigungsaussparungen 19 durch die Mehrfachverstärkungselemente 16 gestützt sein, was zusätzlich zu einer Stabilitätserhöhung des Gehäusemoduls 1 beitragen kann. Durch die Hülsen 3 kann auch eine Verschraubung von Unterteil 11 und Oberteil 12 erfolgen, wie bereits einleitend ausgeführt worden ist, was auch in der Figur 11 veranschaulicht ist.

Bei einer Ausführungsform weisen die Hülsen 3 eine durchgängige Aussparung 31 auf. In diese kann, wie in der Figur 11 exemplarisch gezeigt, ein Kopplungsglied 8, beispielsweise in Gestalt einer Schraube, die Kopplung zwischen dem Gehäusemodul 1 und dem Maschinenteil (nicht gezeigt) bewerkstelligen. Durch Festschrauben des Gehäusemoduls 1 an dem Maschinenteil wird z.B. keine das Gehäusemodul 1 negativ beeinträchtigende Kraft ausgeübt, sondern nur eine Kraft, die auf die Hülsen 3 wirkt, welche in die Befestigungsaussparung 19 greifen und Oberteil 12 und Unterteil 11 zusammenhalten. Steckt man also eine Schraube 8 durch die Hülsen 3, kann das Gehäusemodul 1 mit dieser Schraube 8 an dem Maschinenteil befestigt werden, ohne dabei das Gehäusemodul 1, das aus einem Plastik gefertigt sein kann, zu zerquetschen. Die Kraft der Schraube 8 drückt die beiden Hülsen 3 zusammen und fixiert dabei auch die beiden Gehäusehälften, also Unterteil 11 und Oberteil 12, zueinander (die aber bereits durch besagte Rastverbindungen zusammen gehalten werden), und vor allem das Gehäusemodul 1 an dem Maschinenteil.

Aufgrund einer solchen Konstruktion können durchaus größere Kräfte auf die Befestigungsaussparungen 19 und damit auf das Gehäusemodul 1 einwirken. Daher kann es zweckmäßig sein, dass die Befestigungsaussparungen 19 jeweils mit besagten ein-oder mehrteiligen Hülsen 3 verstärkt werden, die beispielsweise aus einem harten Material, wie einem Metall, gefertigt sein können.

In der Figur 14 sind durch die Kreuzmarkierungen Stellen gekennzeichnet, an denen das Oberteil 12 mit dem Unterteil 11 durch die besagten Verbindungselemente 112 und 122 ineinandergreifen. Diese Veranschaulichung verdeutlicht, dass bei manchen Ausführungsformen auch die Positioniermittel 15 und/oder die Kopplungselemente 13 derartige Verbindungselemente 112/122 ausbilden können. Nach einer Ausführungsform sind also die Positioniermittel 15 und/oder die Kopplungselemente 13 ausgebildet, eine Verrastung zwischen dem Unterteil 11 und dem Oberteil 12 auszubilden.

An dieser Stelle sei eine besondere Eigenschaft der Kopplungselemente 13 gemäß einer oder mehreren Ausführungsformen hervorgehoben: Jedes Kopplungselement 13 kann a) gleichzeitig ausgebildet sein, (i) für eine Aneinanderkopplung von zwei Gehäusemodulen 1, (ii) für eine Verrastung zwischen der Oberseite 12 und der Unterseite 11 des Gehäusemoduls 1 und b) besagte Aussparung 131 aufweisen, die bei Verfüllung des Innenraums des Gehäusemoduls 1 mit dem isolierenden Füllstoff einen Fluss des isolierenden Füllstoffs zwischen den Innenräumen der beiden durch das Kopplungselement 13 aneinander gekoppelten Gehäusemodule 1 ermöglicht.

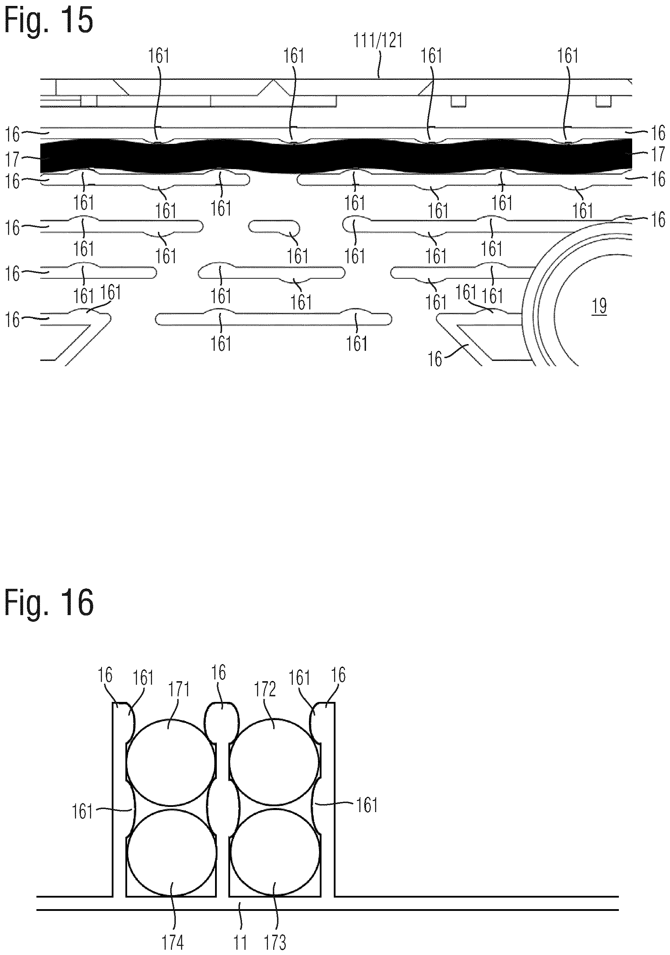

Einige beispielhafte Aspekte der Mehrfachverstärkungselemente 16 sind in der Figur 15 veranschaulicht. So können die Mehrfachverstärkungselemente 16 beispielsweise eine Vielzahl von in Längsrichtung und in Querrichtung zueinander versetzten Wandelementen umfassen, die jeweils, wie oben schon angedeutet, die Höhe der Außenwand 111/121 aufweisen können. Diese Wandelemente können zudem parallel zur Außenwand 111/121 des Gehäusemoduls 1 angeordnet sein. Durch den gegenseitigen Versatz können die Mehrfachverstärkungselemente 16, beispielsweise in Gestalt besagter Wandelemente, eine Führung für eine Stromleitung 17 aufweisen, wobei die Stromleitung 17 beispielsweise mit wenigstens einer der Leistungszuleitung 4 und der Signalzuleitung 5 verbunden ist. In der Figur 15 ist nur eine Strom leitung 17 gezeigt, es versteht sich jedoch, dass auch in den benachbarten Führungen, die durch die Vielzahl der Mehrfachverstärkungselemente 16 ausgebildet sind, Leitungen verlegt werden können.

Nach einer Ausführungsform sind die Mehrfachverstärkungselemente 16 ausgebildet, im Wesentlichen das gesamte Führungssystem, welches zur Führung von Strom- und/oder Signalleitungen innerhalb des Gehäusemoduls 1 notwendig ist, auszubilden.

Zur Ausbildung der Führungen kann es zweckmäßig sein, dass die Mehrfachverstärkungselemente 16 lokale Verbreiterungen 161 aufweisen, die eine entsprechende lokale Verjüngung der ausgebildeten Führung hervorrufen können, wie dies in der Figur 15 veranschaulicht ist. Auf diese Weise kann die Befestigung der Stromleitung 17 innerhalb des Gehäusemoduls 1 unterstützt werden. Zum Beispiel wird die Stromleitung 17 aufgrund einer jeweiligen lokalen Verbreiterung 161 an das der lokalen Verbreitung 161 gegenüberliegende Wandelement gedrückt. Dies kann ein Verrutschen der Stromleitung 17 verhindern.

An dieser Stelle sei darauf hingewiesen dass bei Verfüllung des Innenraums des Gehäusemoduls mit dem isolierenden Füllstoff auch die in den durch die Mehrfachverstärkungselemente 16 ausgebildeten Führungen verlegten Stromleitungen 17 von dem Füllstoff umgeben werden können.

Mit Blick auf das Ausführungsbeispiel gemäß der Figur 16 können die Mehrfachverstärkungselemente 16 jeweils auch mehrere lokale Verbreiterungen 161 aufweisen, die beispielsweise entlang der Höhe des betreffenden Mehrfachverstärkungselements zueinander versetzt angeordnet sind. Auf diese Weise können zum Beispiel übereinanderliegende Führungen für mehrere Leitungen 171, 174 bzw. 172, 173 ausgebildet werden.

Eine oder mehrere der oben beschriebenen Ausführungsformen betreffen ein Gehäusemodulset für eine Spulenanordnung eines eisenlosen Linearmotors, wobei das Gehäusemodulset eine Vielzahl von Gehäusemodulen umfasst, die jeweils im Wesentlichen aus zwei zueinander identisch ausgebildeten Teilen, nämlich besagtem Oberteil und besagtem Unterteil, bestehen können. Das Oberteil und das Unterteil können kostengünstig als Spritzgussteil hergestellt werden, entweder separat voneinander oder als einstückiges Teil. Mit diesem kostengünstig herstellbaren Gehäusemodulen können in vorteilhafter Weise eisenlose Linearmotoren unterschiedlicher Leistungsklassen ausgebildet werden. Die Gehäusemodule zeichnen sich durch eine robuste mechanische Struktur aus, die in Gänze durch ein Spritzgussverfahren erzielt werden kann.

## Patentansprüche

1. Spulenanordnung für einen linearen Elektromotor, umfassend
- eine Anzahl von Einzelspulen (10),
- eine Anzahl von Gehäusemodulen (1), von denen jedes ausgebildet ist, den gleichen Anteil der Anzahl von Einzelspulen (10) einzuschließen, wobei jedes der Gehäusemodule (1) separat von der Spulenanordnung als Kunststoffteil gefertigt worden ist, und wobei alle Gehäusemodule (1) jeweils mindestens ein Kopplungselement (13) aufweisen, das für die gegenseitige Ankopplung von zwei der Gehäusemodule (1) ausgebildet ist und wenigstens teilweise einen Rastverschluss ausbildet;
**dadurch gekennzeichnet, dass**
das mindestens eine Kopplungselement (13) eine Aussparung (131) aufweist, die ausgebildet ist, einen Fluss eines isolierenden Füllstoffs zwischen den Innenräumen der beiden durch das mindestens eine Kopplungselement (13) aneinander gekoppelten Gehäusemodule (1) zu ermöglichen.

2. Spulenanordnung nach Anspruch 1, wobei der lineare Elektromotor ein mehrphasiger Elektromotor ist und die Anzahl von Einzelspulen (10) der Anzahl der Phasen multipliziert mit einem ganzzahligen Faktor entspricht, wobei die Anzahl der Gehäusemodule identisch ist mit dem ganzzahligen Faktor.

3. Spulenanordnung nach Anspruch 1 oder 2, wobei jedes Gehäusemodul (1) ein Unterteil (11) und ein Oberteil (12) aufweist, die den jeweils eingeschlossenen Anteil der Anzahl von Einzelspulen (10) abdecken.

4. Spulenanordnung nach Anspruch 3, wobei das Unterteil (11) und das Oberteil (12) als einstückiges Kunststoffteil gefertigt sind und durch eine flexible Seitenwand (14) miteinander verbunden sind.

5. Spulenanordnung nach Anspruch 3 oder 4, wobei das Unterteil (11) und das Oberteil (12) gleichartig ausgebildet sind.

6. Spulenanordnung nach einem der Ansprüche 3 bis 5, wobei wenigstens eines von dem Unterteil (11) und dem Oberteil (12) ein Positioniermittel (15) umfasst, das eine positionsgenaue Einbringung der jeweiligen Einzelspule (10) erlaubt.

7. Spulenanordnung nach einem der Ansprüche 3 bis 6, wobei das Unterteil (11) und das Oberteil (12) so ausgestaltet sind und so ineinander greifen, dass wenigstens eine elektrisch isolierende Zwischenwand (151) entsteht.

8. Spulenanordnung nach einem der vorstehenden Ansprüche, wobei jedes Gehäusemodul (1) eine Seitenwandstruktur mit Mehrfachverstärkungselementen (16) aufweist, wobei wenigstens eines der Mehrfachverstärkungselemente (16) eine Höhe hat, die so hoch oder halb so hoch ist wie eine Außenwand (111, 121) des Gehäusemoduls (1).

9. Spulenanordnung nach Anspruch 8, wobei die Mehrfachverstärkungselemente (16) eine Führung für eine Stromleitung (17) ausbilden.

10. Spulenanordnung nach einem der vorstehenden Ansprüche, weiter umfassend ein separat von der Anzahl Gehäusemodule (1) gefertigtes Stabilisierungselement (18), wobei jedes Gehäusemodul eine Aufnahme (181) aufweist, die ausgebildet ist, das Stabilisierungselement (18) ganz oder teilweise aufzunehmen.

11. Spulenanordnung nach einem der vorstehenden Ansprüche, wobei der lineare Elektromotor ein eisenloser Linearmotor ist.

12. Spulenanordnung nach einem der vorstehenden Ansprüche, weiter aufweisend wenigstens eine Befestigungsaussparung (19) in wenigstens einem der Gehäusemodule (1), wobei die wenigstens eine Befestigungsaussparung zur Aufnahme einer ein-oder mehrteiligen Hülse (3) ausgebildet ist.

## Claims

1. Coil arrangement for a linear electric motor, comprising
- a number of individual coils (10),
- a number of housing modules (1), of which each is configured to enclose the same proportion of the number of individual coils (10), each of the housing modules (1) having been manufactured separately from the coil arrangement as a plastic part, and all the housing modules (1) having in each case at least one coupling element (13) which is configured for the mutual coupling of two of the housing modules (1) and configuring at least partially a snap-in joint; **characterized in that**
the at least one coupling element (13) has a cut-out (131) which is configured to make a flow of an insulating filler possible between the interior spaces of the two housing modules (1) which are coupled to one another by way of the at least one coupling element (13).

2. Coil arrangement according to Claim 1, the linear electric motor being a multiphase electric motor, and the number of individual coils (10) corresponding to the number of phases multiplied by an integral factor, the number of housing modules being identical to the integral factor.

3. Coil arrangement according to Claim 1 or 2, each housing module (1) having a lower part (11) and an upper part (12) which cover the respectively enclosed proportion of the number of individual coils (10).

4. Coil arrangement according to Claim 3, the lower part (11) and the upper part (12) being manufactured as a single-piece plastic part and being connected to one another by way of a flexible side wall (14).

5. Coil arrangement according to Claim 3 or 4, the lower part (11) and the upper part (12) being of identical configuration.

6. Coil arrangement according to one of Claims 3 to 5, at least one of the lower part (11) and the upper part (12) comprising a positioning means (15) which permits a positionally precise introduction of the respective individual coil (10).

7. Coil arrangement according to one of Claims 3 to 6, the lower part (11) and the upper part (12) being configured in such a way and engaging into one another in such a way that at least one electrically insulating intermediate wall (151) is produced.

8. Coil arrangement according to one of the preceding claims, each housing module (1) having a side wall structure with multiple reinforcing elements (16), at least one of the multiple reinforcing elements (16) having a height which is as high as or half as high as an outer wall (111, 121) of the housing module (1).

9. Coil arrangement according to Claim 8, the multiple reinforcing elements (16) configuring a guide for a power line (17).

10. Coil arrangement according to one of the preceding claims, comprising, furthermore, a stabilizing element (18) which is manufactured separately from the number of housing modules (1), each housing module having a receptacle (181) which is configured to receive the stabilizing element (18) completely or partially.

11. Coil arrangement according to one of the preceding claims, the linear electric motor being an ironless linear motor.

12. Coil arrangement according to one of the preceding claims, having, furthermore, at least one fastening cut-out (19) in at least one of the housing modules (1), the at least one fastening cut-out being configured for receiving a single-piece or multiple-piece sleeve (3).

## Revendications

1. Agencement de bobines pour un moteur électrique linéaire, comprenant :
- une pluralité de bobines individuelles (10),
- une pluralité de modules de boîtier (1), chacun étant réalisé de manière à renfermer la même proportion du nombre de bobines individuelles (10), chacun des modules de boîtier (1) ayant été fabriqué séparément de l'agencement de bobines sous forme de pièce en plastique, et tous les modules de boîtier (1) présentant à chaque fois au moins un élément de couplage (13) qui est réalisé pour le couplage mutuel de deux des modules de boîtier (1) et constitue au moins en partie une fermeture par encliquetage ;
**caractérisé en ce que**
l'au moins un élément de couplage (13) présente un évidement (131) qui est réalisé de manière à permettre un flux d'une matière de remplissage isolante entre les espaces internes des deux modules de boîtier (1) accouplés l'un à l'autre par l'au moins un élément de couplage (13).

2. Agencement de bobines selon la revendication 1, dans lequel le moteur électrique linéaire est un moteur électrique multiphasé et le nombre de bobines individuelles (10) correspond au nombre de phases multiplié par un facteur entier, le nombre de modules de boîtier étant identique au facteur entier.

3. Agencement de bobines selon la revendication 1 ou 2, dans lequel chaque module de boîtier (1) présente une partie inférieure (11) et une partie supérieure (12) qui recouvrent la proportion respective renfermée du nombre de bobines individuelles (10).

4. Agencement de bobines selon la revendication 3, dans lequel la partie inférieure (11) et la partie supérieure (12) sont fabriquées sous forme de pièce en plastique d'une seule pièce et sont connectées l'une à l'autre par une paroi latérale flexible (14).

5. Agencement de bobines selon la revendication 3 ou 4, dans lequel la partie inférieure (11) et la partie supérieure (12) sont réalisées de manière identique.

6. Agencement de bobines selon l'une quelconque des revendications 3 à 5, dans lequel au moins l'une parmi la partie inférieure (11) et la partie supérieure (12) comprend un moyen de positionnement (15) qui permet un montage en position exacte de chaque bobine individuelle (10) .

7. Agencement de bobines selon l'une quelconque des revendications 3 à 6, dans lequel la partie inférieure (11) et la partie supérieure (12) sont réalisées et s'engagent l'une dans l'autre de telle sorte qu'au moins une paroi intermédiaire électriquement isolante (151) soit produite.

8. Agencement de bobines selon l'une quelconque des revendications précédentes, dans lequel chaque module de boîtier (1) présente une structure de paroi latérale avec des éléments de renforcement multiple (16), au moins l'un des éléments de renforcement multiple (16) présente une hauteur qui est aussi haute ou deux fois moins haute qu'une paroi extérieure (111, 121) du module de boîtier (1).

9. Agencement de bobines selon la revendication 8, dans lequel les éléments de renforcement multiple (16) constituent un guide pour une ligne électrique (17) .

10. Agencement de bobines selon l'une quelconque des revendications précédentes, comprenant en outre un élément de stabilisation (18) fabriqué séparément du nombre de modules de boîtier (1), chaque module de boîtier présentant un logement (181) qui est réalisé pour recevoir complètement ou en partie l'élément de stabilisation (18).

11. Agencement de bobines selon l'une quelconque des revendications précédentes, dans lequel le moteur électrique linéaire est un moteur linéaire sans fer.

12. Agencement de bobines selon l'une quelconque des revendications précédentes, présentant en outre au moins un évidement de fixation (19) dans au moins l'un des modules de boîtier (1), l'au moins un évidement de fixation étant réalisé pour recevoir une douille en une ou plusieurs parties (3).
